## Europäisches Patentamt
## European Patent Office
## Office européen des brevets

(19)

(11) Veröffentlichungsnummer : **0 037 540**
**B1**

(12)

# EUROPÄISCHE PATENTSCHRIFT

(45) Veröffentlichungstag der Patentschrift :
02.01.86

(51) Int. Cl.⁴ : **H 04 M 19/02, H 04 Q 11/04**

(21) Anmeldenummer : **81102363.9**

(22) Anmeldetag : **28.03.81**

(54) **Verfahren und Schaltungsanordnung zur Zuführung von Rufsignalen zu Fernmeldeleitungen, insbesondere in Fernsprechvermittlungsanlagen.**

(30) Priorität : **31.03.80 US 135756**

(43) Veröffentlichungstag der Anmeldung :
**14.10.81 Patentblatt 81/41**

(45) Bekanntmachung des Hinweises auf die Patenterteilung : **02.01.86 Patentblatt 86/01**

(84) Benannte Vertragsstaaten :
**AT CH DE FR GB IT LI NL**

(56) Entgegenhaltungen :
**FR-A- 2 129 281**
**US-A- 4 097 694**

(73) Patentinhaber : **International Standard Electric Corporation**
**320 Park Avenue**
**New York New York 10022 (US)**

(72) Erfinder : **Das, Santanu**
**31 Winfield Drive**
**Huntington Connecticut (US)**
Erfinder : **Chea, Ramon C.W., Jr.**
**65 William Henry Drive**
**Monroe Connecticut (US)**
Erfinder : **Casterline, Russ C.**
**271 Putting Green Rd.**
**Trumbul Connecticut (US)**

(74) Vertreter : **Graf, Georg Hugo, Dipl.-Ing. et al**
**c/o Standard Elektrik Lorenz AG Patent- und Lizenzwesen Postfach 300 929 Kurze Strasse 8 D-7000 Stuttgart 30 (DE)**

EP 0 037 540 B1

## Beschreibung

Die Erfindung betrifft ein Verfahren der im Oberbegriff des Patentanspruchs 1 angegebenen Art und eine Schaltungsanordnung zur Durchführung des Verfahrens.

In Fernsprechvermittlungsanlagen werden üblicherweise die Rufsignale derart geliefert, daß aus einer Rufschaltung jeweils gleichzeitig nur eine zu rufende Teilnehmerleitung mit Rufsignalen versorgt werden kann. Daher muß neben der den Rufstrom erzeugenden Rufschaltung ein Rufbeantwortungsdetektor vorgesehen werden, der nach dem Melden des gerufenen Teilnehmers die Abschaltung der Rufsignale von dieser Teilnehmerleitung bewirkt und der es daher ermöglicht, die gleiche Rufschaltung nacheinander an viele zu rufende Teilnehmerleitungen anzuschließen. Ein Rufsignal besteht meist aus einer kurzen Phase Rufstrom mit einer anschließenden, längeren Rufpause, und wiederholt sich zyklisch im sogenannten Rufzyklus.

Wenn ein Sofortruf gegeben werden soll, um nicht nach Anschaltung der Rufschaltung an die Fernmeldeleitung im ungünstigsten Fall fast die gesamte Rufpause bis zur ersten zyklischen Rufstromphase abwarten zu müssen, dann muß jede Rufschaltung mit zwei Rufsignalgeneratoren ausgerüstet sein. Der eine Rufsignalgenerator muß dabei ständig arbeiten, während der andere in Phasen arbeitet. Eine derartige Rufschaltung weist eine Steuerung auf, die die zu rufende Teilnehmerleitung während einer bestimmten Zeitspanne von beispielsweise 300 ms mit dem ständig arbeitenden Rufsignalgenerator und anschließend mit dem in Phasen arbeitenden Rufsignalgenerator verbindet. Diese bekannten Rufschaltungen erfordern für mehrfrequente Rufsignale oder für Rufsignale unterschiedlicher Frequenz entweder verschiedene oder solche Rufstromquellen, die jeden Rufstromtyp zur Verfügung stellen können. In diesem Fall müssen die verschiedenen Rufsignale über Leitungsbündel übertragen werden, oder es müssen mehrere Relais oder Schalter für jede Rufschaltung aufgewendet werden.

Nachfolgend werden in Übereinstimmung mit der Ursprungsanmeldung zum besseren Verständnis der erwähnten üblichen Technik bzw. des Aufbaus des gewählten Ausführungsbeispiels Hinweise auf andere Schutzrechte gegeben. Bekannte Rufschaltungen sind beispielsweise in den US-Patentschriften 3 767 857, 3 678 208, 4 075 430, 3 005 053, 3 085 133, 3 118 019 und 4 161 633 beschrieben. Die US-Patentschrift 3 767 857 (entspricht DE-OS 22 11 003) bezieht sich auf Rufschaltungen für Fernsprechanlagen, die einen Sofortruf verteilen. Die US-Patentschrift 3 678 208 befaßt sich mit der Bereitstellung eines Sofortrufs unter Verwendung von Verbindungssätzen, die verschiedenen Zeitlagen des Rufzyklus zugeordnet sind. Die US-Patentschrift 4 075 430 betrifft die Leitungssignalisierung über einen gemeinsamen Sammelkanal für Fernsprechanlagen. Die US-Patentschrift 3 005 053 befaßt sich mit einem Fernsprechsignalisierungssystem, das verschiedene Signalfrequenzen in verschiedenen Zeitlagen überträgt. Die US-Patentschrift 3 085 133 bezieht sich auf eine automatisch gesteuerte Rufsignalversorgung, wobei der Rufstrom unmittelbar nach Durchschaltung der Verbindung, danach aber in Übereinstimmung mit dem üblichen Rufzyklus zur Verfügung gestellt wird. Die US-Patentschrift 3 118 018 betrifft die Verbindung einer Rufstromquelle mit einem gewünschten Fernsprechapparat über ein Paar in Reihe geschalteter Gatter, die beide in Phase arbeiten müssen, damit der Rufstrom den Fernsprechapparat erreichen kann. Teilnehmeranschlußschaltungen des Typs, wie er in Verbindung mit der vorliegenden Erfindung benutzt werden kann und der programmierbare Signalgeneratoren enthält, die Wechselstrom- und Gleichstromsignalspannungen erzeugen können, sind beispielsweise in der US-Patentschrift 4 161 633 beschrieben worden. Dort sind auch Einzelheiten der programmierbaren Signalerzeugung in einer digitalen Teilnehmeranschlußschaltung angeführt. Digitale Fernsprechkoppelnetze eines Typs, bei dem die vorliegende Erfindung besonders vorteilhaft benutzt werden kann, sind im einzelnen in der DE-OS 29 09 762 vorgeschlagen worden.

Aus der US-Patentschrift 4 097 694 ist eine rechnergesteuerte Sprechanlage mit Zeitvielfachbetrieb beschrieben, bei der über für den Zeitvielfachbetrieb vorgesehene Gatter auch der Ruf geleitet wird. Es sind für den Ruf mehrere, vermutlich auf derselben Frequenz arbeitende Generatoren vorgesehen, die über zugeordnete Gatter zu den gerufenen Teilnehmern durchschaltbar sind. Die Art und Steuerung der Rufgeneratoren sind nicht genau beschrieben. Die Generatoren sind verschiedenen Taktarten zugeordnet. Entsprechend verschiedener Kombinationen bestimmter Bits in einer Logikschaltung können beispielsweise der Freiton und der Rufton gesteuert werden ; die Generatoren sind nämlich auch für Hörtöne vorgesehen.

Diese bekannte Sprechanlage ist zwar digital gesteuert, aber die Sprechsignale selbst werden nicht codiert übertragen. Die Rufwechselspannungen werden einem Rufsignalbus unmittelbar zugeführt. Die Sprechanlage arbeitet mit einem Rufpausendetektor.

Die technische Aufgabe des Verfahrens nach der Erfindung besteht darin, den Fernmeldeleitungen die erforderlichen Rufsignale zuzuführen, wobei das Verfahren die Erfüllung von Sonderbedingungen, wie z. B. Ruf mit unterschiedlichen Rufsignalfrequenzen, unterschiedlichen Rufsignalkadenzen und Mehrfrequenzrufsignale ermöglichen soll.

Diese Aufgabe wird mit den Merkmalen des Patentanspruchs 1 gelöst.

Eine besondere Ausgestaltung des Verfahrens nach der Erfindung ist im Patentanspruch 2 gekennzeichnet. Dabei lassen sich die Forderungen nach unterschiedlichen Rufsignalkadenzen und nach einem Sofortruf besonders einfach, nämlich auf einheitliche Art und Weise erfüllen.

Eine Weiterbildung des Verfahrens nach der Erfindung ist im Patentanspruch 3 gekennzeichnet. Diese bewirkt, daß die sonst beim Abschalten des Rufstroms auftretenden induktiven Spannungen nicht mehr zu Störungen führen und daher kleinere und damit billigere Relaiskontakte verwendet werden können.

Die technische Aufgabe der Schaltungsanordnung nach der Erfindung besteht darin, bedarfsweise Fernmeldeleitungen die erforderlichen Rufsignale zuzuführen. Sie soll insbesondere zur Durchführung des Verfahrens nach Patentanspruch 1 bei digital arbeitenden Fernsprechvermittlungsanlagen geeignet sein, bei denen schon wegen der digitalen Durchschaltung im Koppelnetz, meist über Halbleiterkoppelpunkte, eine zentrale Einspeisung von Rufsignalen nicht geeignet ist. Die Schaltungsanordnung nach der Erfindung soll aber auch allgemein, bei geringfügig abweichenden Rufverfahren auf Fernmeldeleitungen verwendbar sein.

Diese Aufgabe wird mit den Merkmalen des Patentanspruchs 4 gelöst.

Besondere Ausgestaltungen und Weiterbildungen der Schaltungsanordnung nach der Erfindung sind in den Patentansprüchen 5 bis 11 gekennzeichnet.

Die Erfindung wird nun anhand von Ausführungsbeispielen näher erläutert. Es zeigen :

Figur 1 eine vereinfachte Übersicht einer modularen Schnittstelleneinrichtung einer Fernsprechvermittlungsanlage, in der die Erfindung zur Anwendung kommt,

Figur 2 ein Blockschaltbild einer Teilnehmeranschlußeinrichtung zur Erläuterung der Rufsignalzuführung,

Figur 3 eine Schaltungsanordnung einer zwischen den Teilnehmeranschlußleitungen und den üblichen Teilnehmeranschlußschaltungen liegenden Schnittstelleneinrichtung,

Figur 4 eine Rufschaltung,

Figur 5 ein generelles Blockschaltbild zur Rufsignalerzeugung,

Figuren 6a bis 6c verschiedene Zeitdiagramme zur Erläuterung der Rufvorgänge und

Figur 7 eine näher ausgeführte Schaltungsanordnung für einen Rufbeantwortungsdetektor, der in Verbindung mit der Erfindung benutzt werden kann.

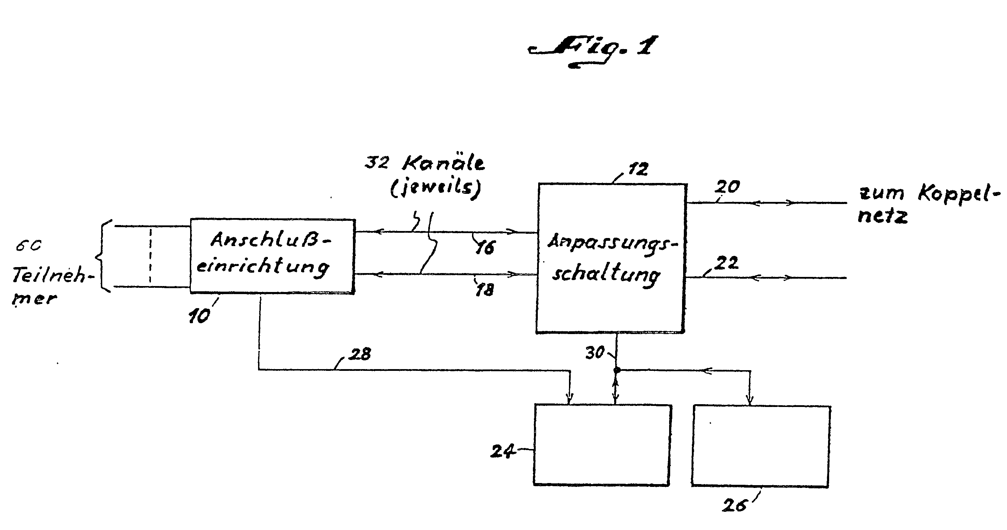

Die vereinfachte Übersicht nach Fig. 1 zeigt eine Anschlußeinrichtung 10, die eine Gruppe von 60 Teilnehmeranschlußschaltungen umfaßt und die über eine Anpassungsschaltung 12 mit einem digital arbeitenden Koppelnetz verbunden ist. Ein Mikroprozessor 24, der wiederholt Eingangsdaten empfängt, diese verarbeitet und die daraus abgeleiteten Ausgangsdaten ausgibt, benutzt die Anpassungsschaltung 12 ebenfalls, um mit anderen Mikroprozessoren der Fernsprechvermittlungsanlage Daten auszutauschen. Die Anschlußeinrichtung 10 bildet ein Anschlußmodul, das eine programmierbare Stromversorgung zur Anpassung analog arbeitender Teilnehmerleitungen und Verbindungsleitungen an eine digital arbeitende Fernsprechvermittlungsanlage mit allen Analog-Digital-Umwandlungen, Digital-Analog-Umwandlungen und Zweidraht-Vierdraht-Übergängen umfaßt.

Die Anschlußeinrichtung 10 umfaßt auch Anschalteglieder zur Anschaltung der Rufsignale und anderer Tonfrequenzspannungen zur Messung, Prüfung und Leitungsüberwachung. Eine stetige Überwachung unter Steuerung mit verdrahtetem Programm oder unter Steuerung mit einem Mikroprozessor für einen programmierbaren Signalgenerator wird auch benutzt, um Potentialänderungen auf den Adern der Teilnehmerleitungen zu erfassen. Das Ausfiltern von Sprachsignalen kann dabei unter Steuerung eines Mikroprozessors oder festverdrahteten Programms erreicht werden. Eine derartige Teilnehmeranschlußschaltung ist im US-Patent 4 161 633 beschrieben worden. Das digitale Koppelnetz kann mit einer verteilten Steuerung arbeiten. Die Sprachsignale werden PCM-codiert im Zeitmultiplexverfahren über die Leitungen 16 und 18 übertragen, von denen jede 32 Kanäle hat, so daß für die 60 angeschlossenen Leitungen keine Blockierung beim Zugriff auf die Anpassungsschaltung 12 auftritt. Ein weiteres Paar von Leitungen 20, 22 mit jeweils 32 Kanälen führt von der Anpassungsschaltung 12 zum Koppelnetz ; auch diese Leitungen werden im Zeitmultiplexverfahren betrieben.

Die Anschlußeinrichtung 10 ist über einen Datenbus 28 mit dem Mikroprozessor 24 verbunden ; auf diesem Datenbus werden die Daten mit niedriger Geschwindigkeit übertragen. Die Anpassungsschaltung 12 ist über einen weiteren Datenbus 30 ebenfalls mit dem Mikroprozessor 24 verbunden ; auf diesem Datenbus werden die Daten mit hoher Geschwindigkeit übertragen. Der Datenbus 28 wird vom Mikroprozessor 24 beispielsweise dazu benutzt, analog arbeitende Teilnehmerleitungen oder andere angeschlossene Einrichtungen zu steuern ; der Mikroprozessor 24 ist vorzugsweise vom Typ Intel 8086. Der Datenbus 28 kann z. B. aus dreizehn Adern bestehen, über die Adressen und Daten im Vielfach übertragen werden. Über den Datenbus 30 wird die Funktion der Anpassungsschaltung 12 und zugehöriger peripherer, mit hoher Geschwindigkeit arbeitender Einrichtungen gesteuert. Der Datenbus 30 schließt einen Steuerweg zwischen dem Mikroprozessor 24 und einem Speicher 26 ein. Mikroprozessor 24 und Speicher 26 bilden einen Mikrocomputer. Der Datenbus 30 umfaßt getrennte Adern für die Adressierung und die Datenübertragung, wobei die Datenadern die Übertragung von 16-Bit-Wörtern ermöglichen.

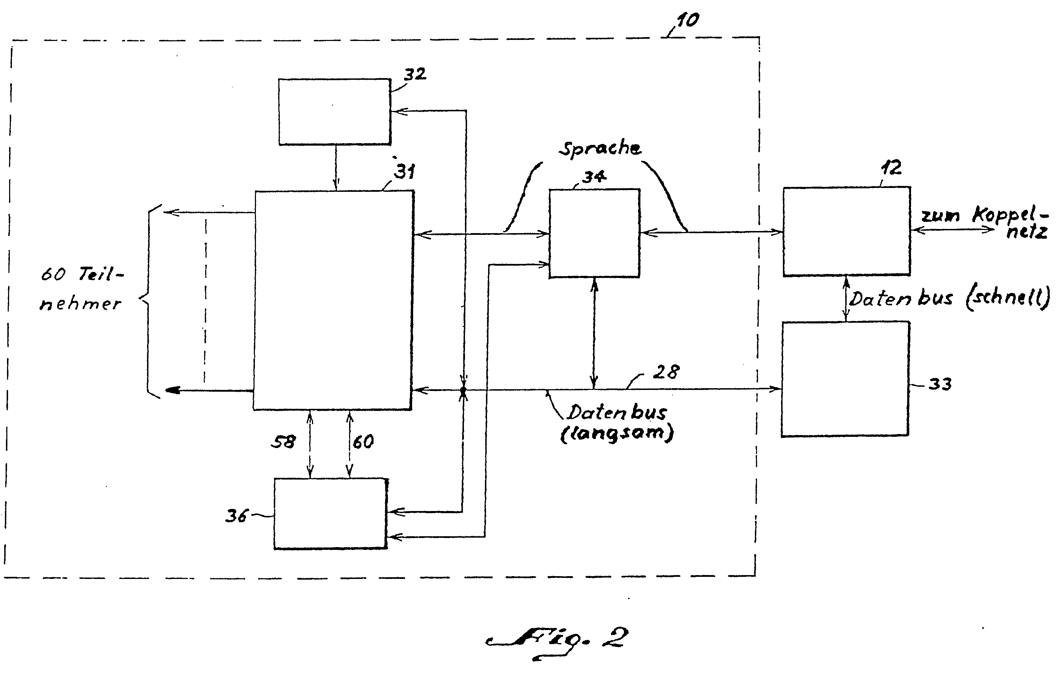

Fig. 2 zeigt ein Blockschaltbild von Einzelheiten einer Anschlußeinrichtung 10, die zum Anschluß von 60 Teilnehmerleitungen eingerichtet ist. Sie sorgt für die Leitungsabschlußfunktionen, die Ruffunktionen, andere gemeinsame Leitungsfunktionen, Anpassungsfunktionen und für den Zugang zum Mikrocomputer 33. Obwohl sich die vorliegende Erfindung mit der autonomen Ruffunktion in der Anschlußeinrichtung 10 und mit dem Aufbau einer solchen Anschlußeinrichtung befaßt, ist eine grobe Beschreibung des gesamten Systems, in dem die vorliegende Erfindung vorteilhaft verwendbar ist, für das völlige Verständnis der Erfindung nützlich. Die Anschlußeinrichtung 10, die beispielsweise einen Block 31 mit sechzig Teilnehmeranschlußschaltungen aufweist, bildet einen Sicherheitsblock von Leitungsanschlüssen. Acht solche Anschlußeinrichtungen (10) bilden eine Anschlußeinheit (480 Teilnehmerleitunten). Eine Anschlußeinrichtung (10) je Anschlußeinheit ist als Ersatzeinheit für den Fall reserviert, in dem eine der anderen Anschlußeinrichtungen fehlerhaft arbeitet. Jede Anschlußeinrichtung 10 weist einen Rufschaltungsblock 32 mit zwei Rufschaltungen auf, von denen jede 30 Teilnehmerleitungen bedient. Für andere Funktionen, die nicht unmittelbar Gegenstand der Erfindung sind, sind ein Multiplexer 34 zur gemeinsamen Übertragung digitalisierter Analogsteuersignale und Prüfschaltungen 36 zur Schaffung des Zugangs für die Prüfung aller Teilnehmerleitungen vorgesehen.

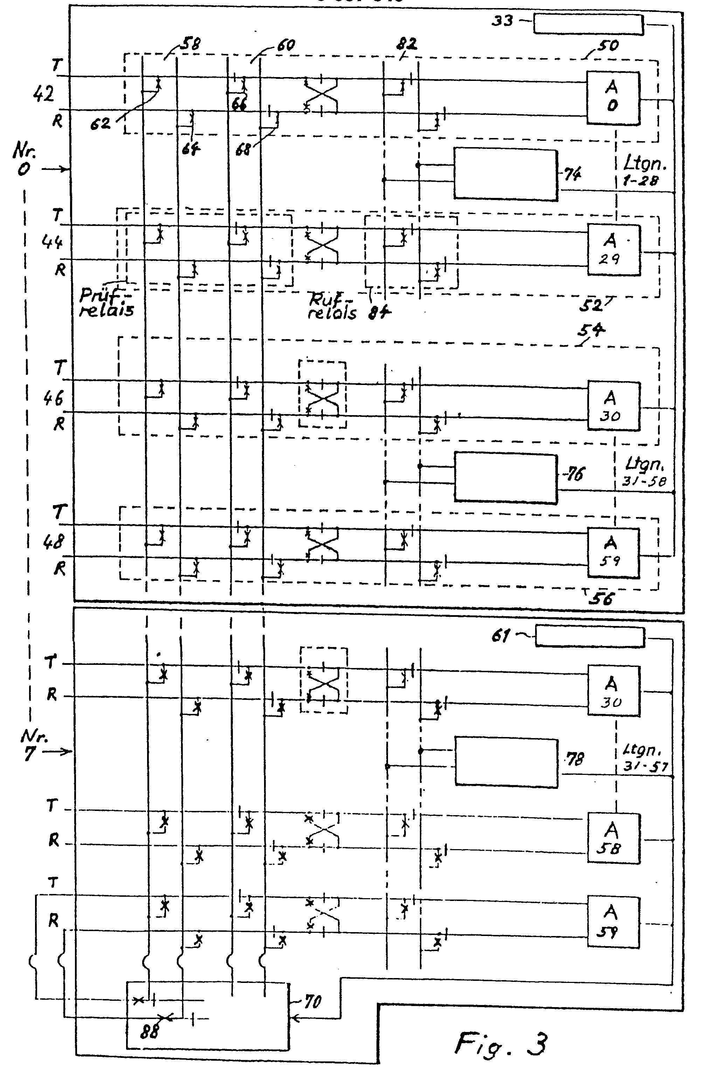

In Fig. 3 ist der Aufbau der analog arbeitenden Anschlußeinrichtungen (10) einer Anschlußeinheit gezeigt. Jede Anschlußeinheit umfaßt acht Anschlußeinrichtungen (10) Nr. 0 bis 7, von denen hier nur die Nr. 0 und Nr. 7 dargestellt sind. An die Anschlußeinrichtung (10) Nr. 0 sind 60 Teilnehmerleitungen mit ihren Sprechadern angeschlossen. Von diesen Leitungen sind die vier Teilnehmerleitungen 42, 44, 46 und 48 dargestellt. In erweiterten Anschlußschaltungen 50, 52, 54 und 56 sorgen je zwei Relais für eine unabhängige und individuelle Verbindung mit zwei Prüfsignalbussen 58 und 60, die auch in Fig. 2 angedeutet sind. Beispielsweise ist die Teilnehmerleitung 42 der Anschlußeinrichtung Nr. 0 über die Relais 62 und 64 mit dem äußeren Prüfsignalbus 58 und über die Relais 66 und 68 mit dem inneren Prüfsignalbus 60 verbunden. In gleicher Weise ist eine metallische Verbindung zu den Prüfsignalbussen 58 und 60 für die Teilnehmerleitungen 46 und 48 in der Anschlußeinrichtung Nr. 0 und für die Teilnehmerleitungen in den Anschlußeinrichtungen Nr. 1 bis 7 über entsprechende Relais möglich. Die Arbeitsweise der Relais 62 bis 68 teilt die Teilnehmerleitungsschleife 42 in zwei Teile, wobei der außenliegende Teil der Teilnehmerleitung von dem innenliegenden Teil der Leitungsschleife völlig getrennt ist, wenn jede Ader der Teilnehmerleitung 42 mit den Prüfsignalbussen 58 und 60 verbunden ist. Der äußere Prüfsignalbus 58 und der innere Prüfsignalbus 60 enden in einem Prüfanschalteglied 70, das in Fernsprechvermittlungsanlagen typischerweise eine Einrichtung ist, die auch zusätzliche Funktionen zu den Prüffunktionen übernimmt, wobei die Prüfsignalbusse zur Fehlersuche und für die Suche nach fehlerhaften Leitungsabschnitten, wie im Fall eines Leitungskurzschlusses, benutzt werden. Das Prüfanschalteglied 70 umfaßt auch eine Schaltung, die im Störfall einer Anschlußschaltung in der Anschlußeinheit veranlaßt, daß eine Ersatzanschlußschaltung solange zur Verfügung gestellt wird, bis die gestörte Anschlußschaltung wieder betriebsbereit ist. Dieser Ersatz ist besonders in unbemannten Vermittlungsanlagen wichtig.

Jede Rufschaltung der Rufschaltungen 74, 76, 78 ist für jeweils 30 Teilnehmerleitungen vorgesehen, die jeweils über einen Rufsignalbus 82 mit der betreffenden Rufschaltung verbindbar sind, wenn ein Rufrelais 84 in der erweiterten Anschlußschaltung 52 entsprechend gesteuert wird. Die Rufschaltung 74 und das Rufrelais 84 werden vom Mikrocomputer 33 gesteuert.

Das Programm im Mikrocomputer bestimmt ebenfalls die Rufsignalfolge und das einzelne Rufsignal, das Impuls/Pausenverhältnis, die Frequenz und die Gleichvorspannung. Die Rufschaltung 74 weist auch eine Anordnung zur Überwachung der Leitungsschleife auf, die das Abheben des Handapparats erkennt und dann den Ruf abschaltet und die während des Rufvorgangs das Weiterbestehen der Leitungsschleife auf der Seite des rufenden Teilnehmers prüft.

Im Rahmen des Ausführungsbeispiels für die vorliegende Erfindung wird eine Anschlußschaltung innerhalb der Gruppe von 480 Anschlußschaltungen als Ersatzanschlußschaltung verwendet. Selbstverständlich ist die Größe der Gruppe abhängig von den Systemerfordernissen variabel. Falls eine Anschlußschaltung fehlerhaft arbeitet, was durch das Wartungsprogramm innerhalb des Mikrocomputers oder durch andere, beispielsweise in dem Prüfanschalteglied 70 vorhandene Erkennungsschaltungen erkannt wird, wird die Ersatzanschlußschaltung anstelle der gestörten Anschlußschaltung an die betreffende Teilnehmerleitung angeschaltet. Auf diese Weise wird der Betrieb aufrechterhalten, bis der Routinewartungsdienst die Störung behoben hat.

Die Vorgänge beim Ersatz einer Anschlußschaltung sind beispielsweise folgende :

a) Wartungsschaltungen oder ein Wartungsprogramm im Mikrocomputer stellen die gestörte Leitung fest, beispielsweise die der Anschlußschaltung 50 entsprechende Leitung 42 in der Anschlußeinrichtung Nr. 0.

b) Die Relais 62, 64, 66 und 68 in der erweiterten Anschlußschaltung 50 werden vom Mikrocomputer angesteuert, wobei die gestörte Teilnehmerleitungsschleife in zwei Teile aufgespalten wird. Der teilnehmerseitige Teil der Leitungsschleife wird mit dem äußeren Prüfsignalbus 58 verbunden, während der andere, koppelnetzseitige Teil mit dem inneren Prüfsignalbus 60 gekoppelt wird.

c) Ein Relais 88 im Prüfanschalteglied 70 wird betätigt. Der innere Teil der Anschlußschaltung 50 wird als gestört erkannt.

d) Die beschriebenen Relaisfunktionen sorgen für die Verbindung der betreffenden Teilnehmerleitung 42 über den äußeren Prüfsignalbus 58 mit der Ersatzanschlußschaltung, an die eine der üblichen Abschlußschaltungen A0 bis A59 angeschlossen ist (Abschlußschaltung A59 in Anschlußeinrichtung Nr. 7).

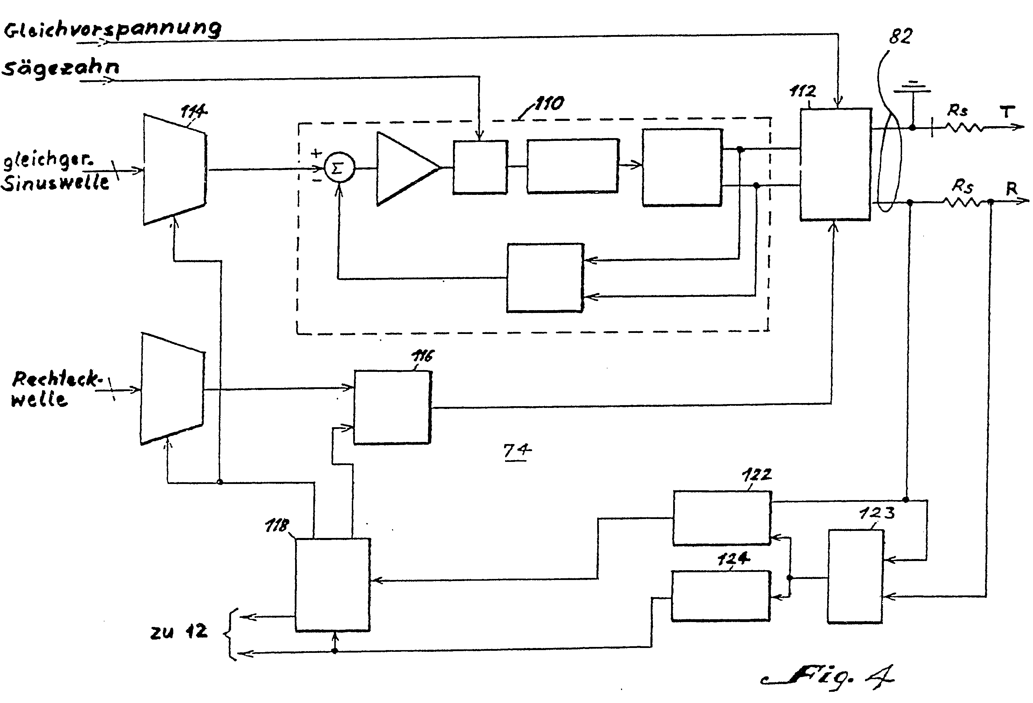

Die Rufrelais 84 werden lastfrei geschaltet, d. h., daß die Kontakte des Rufrelais dann geöffnet oder geschlossen werden, wenn kein Strom über diese Kontakte fließt. Bei den üblichen Fernsprechanlagen werden die Rufrelaiskontakte unabhängig davon geöffnet oder geschlossen, ob Strom über die Kontakte fließt oder nicht. Deshalb sind große und damit teurere Kontakte üblich, die den bei Abschaltung des Relais entstehenden Lichtbogen aushalten können. Auch stellt die Teilnehmerleitungsschleife eine große Induktivität dar, so daß eine Stromunterbrechung eine hohe Spannungsspitze zur Folge hat. Dies führt zur Funkenbildung auf einer gedruckten Schaltungskarte, die als Störspannung in benachbarten Schaltungen wirkt. Durch die Messung des Stromnulldurchgangs an einem Strommeßwiderstand RS (Fig. 4), der mit einer Pufferstufe 123 innerhalb einer Rufüberwachungsschaltung verbunden ist, wird innerhalb einer Steuerschaltung 118 mit Hilfe eines an diese Steuerschaltung angeschlossenen Mikrocomputers ein geeignetes Steuersignal erzeugt, so daß das Rufrelais 84 nur dann geschaltet wird, wenn kein Strom über seine Kontakte fließt.

In Fig. 4 ist eine Rufschaltung 74 zur Rufsignalerzeugung dargestellt. Zwei solcher Rufsignalerzeugungsschaltungen bilden zusammen mit den Rufrelais der erweiterten Anschlußschaltungen und der programmierten Steuerung im Mikrocomputer eine Rufeinheit. Die gewählte Programmierung ist nicht Gegenstand der Erfindung. Zum besseren Verständnis der Erfindung sei aber darauf hingewiesen, daß die hier erwähnten Rufmerkmale, wie Rufdauer usw., mit Hilfe von Steuersignalen irgendeines solchen Mikrocomputers oder eines programmierbar gesteuerten Eingangs der Rufschaltung variabel sind.

In Fig. 4 ist die Rufschaltung 74 zum besseren Verständnis noch etwas näher ausgeführt, obwohl eine solche Rufschaltung Gegenstand eine parallelen Anmeldung (EP-A-0 037 111, Priorität 31.3.80 Anmeldetag 28.3.81) ist. Ein programmierbarer Rufsignalgenerator 110, 112 erzeugt unter der Steuerung des Mikrocomputers ein Rufsignal, wie es im bereits genannten US-Patent 4 161 633 beschrieben worden ist. Das erzeugte Rufsignal wird von der Ausgangsstufe 112 des programmierbaren Rufsignalgenerators über den Rufsignalbus 82 den Sprechadern T, R zugeführt. Rufreferenzsignale von Rufsignalreferenzspannungsquellen gelangen zu einem analogen Multiplexer 114 und dann letztlich zur Ausgangsstufe 112 des Rufsignalgenerators. Rechteckwellen, die mit den Rufreferenzsignalen synchronisiert sind, werden ebenfalls der Ausgangsstufe 112 des Rufsignalgenerators zugeführt, und zwar über einen Schaltverstärker 116, der auch durch ein logisches Signal aus der Steuerschaltung 118 gesteuert wird. Ein Rufpausendetektor 124 und ein Rufbeantwortungsdetektor 122 sind, wie schon erwähnt, dazu vorgesehen, die Steuerschaltung 118 mit Informationen über die Rufsignale auf dem Rufsignalbus 82 zu versorgen.

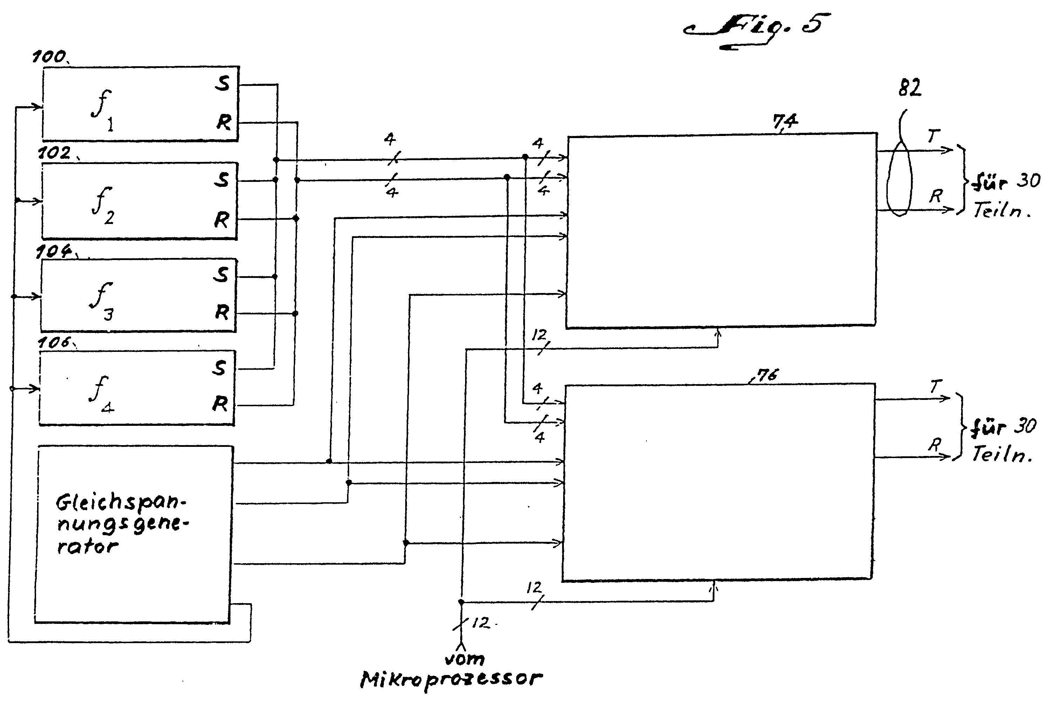

In Fig. 5 führt eine zwölfadrige Steuerverbindung vom Mikroprozessor zu einem Paar Rufschaltungen 74, 76, die jede 30 Leitungen über einen gemeinsamen Rufsignalbus versorgt. Eine Anzahl Signale mit niedrigem Pegel und verschiedenen Frequenzen f1 bis f4, die in Rufsignalreferenzspannungsquellen 100, 102, 104 und 106 erzeugt werden, werden den Rufschaltungen 74 und 76 zugeführt. Diese Rufschaltungen arbeiten als Leistungsverstärker, die die Signale mit niedrigen Spannungen auf Signale mit hohen Spannungen bringen. Die Niedrigpegelsignale sind Sinuswellen (Ausgänge S) oder Rechteckwellen (Ausgänge R) der Rufsignalreferenzspannungsquellen 100 bis 106. Die von den Rufschaltungen 74, 76 abgehenden Signale sind zum Rufen über die Teilnehmerleitungen erforderliche Leistungssignale.

Wie noch näher beschrieben wird, werden die Rufrelais in den Anschlußschaltungen synchron mit der Rufschaltung erregt und entregt, damit Rufsignale einer gewünschten Kadenz und Frequenz eingespeist werden können und damit ein lastfreier Schaltbetrieb der Rufrelais in den Anschlußschaltungen erreicht werden kann. Das Rufsignal kann entweder zwischen einer der Sprechadern und Erde oder über beide Sprechadern eingespeist werden. Die Rufschaltung 74 bzw. 76 erkennt das Abheben des Handapparats während eines Rufintervalls im Rufzyklus und schaltet das Rufsignal nach einer bestimmten Zeitdauer ab (Abschalteverzögerung). Ein Rufbeantwortungsdetektor erkennt den Gleichstromfluß in der Teilnehmerleitung. Ein den abgehobenen Zustand des Handapparats kennzeichnendes Signal wird dann zur Steuerung der Vermittlungsanlage übertragen.

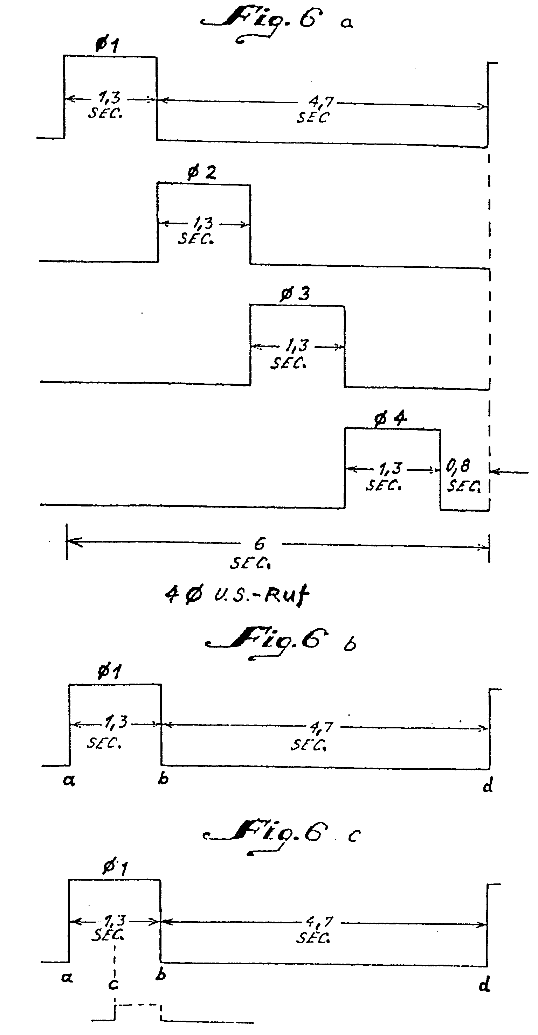

In Fig. 6 sind Kurven gezeigt, die die Verteilung der Rufphasen angeben. Es sind als Beispiel vier verschiedene Phasen für bis zu vier Fernsprechapparate mit überbrückten, auf die Frequenzen von 20, 30, 40 und 50 Hz abstimmbaren Weckern vorgesehen. Wenn beispielsweise eine Rufschaltung fünfzehn Leitungen bedient, vier Rufphasen besitzt und ein Rufsignal mit 1,3 s Rufstromimpuls und 4,7 s Rufpause aufweist, kann unter Berücksichtigung der Fig. 6 folgende Analyse vorgenommen werden. Da jede Rufschaltung fünfzehn Leitungen bedient, gibt es vier Rufphasen für fünfzehn Leitungen. Wenn ein ankommender Verkehr von 0,05 Erlang/Leitung, eine Verbindungshaltedauer von 100 s und eine Rufdauer von 20 s angenommen werden, so beträgt der Rufverkehr während der Hauptverkehrsstunde 0,15 Erlang. Bei vier Rufphasen ist die Blockierungswahrscheinlichkeit kleiner als 0,001. Ein Hauptverkehrsstunden-Rufverkehr von 0,15 Erlang entspricht einer Wahrscheinlichkeit von 0,15 in der Hauptverkehrsstunde dafür, daß wenigstens eine Rufphase belegt ist, d. h. die Wahrscheinlichkeit beträgt 0,85 dafür, daß keine Rufphase belegt ist. Daher beträgt die Sofortrufwahrscheinlichkeit 0,85. Das bedeutet, daß ohne weiteres 85 % der Verbindungsanforderungen einen Sofortruf erhalten. Wenn der Verkehr außerhalb der Hauptverkehrsstunde zu einem Drittel des Verkehrs in der Hauptverkehrsstunde angenommen wird, so ergibt die Berechnung der Sofortrufwahrscheinlichkeit den Wert 0,95. Das bedeutet, daß 95 % der Verbindungsanforderungen einen Sofortruf erhalten. Unter Berücksichtigung der Fig. 6b ist festgestellt worden, daß sogar unter der Bedingung stärksten Rufverkehrs die Wahrscheinlichkeit, daß eine Leitung von 15 Leitungen gerufen wird, etwa 0,225 beträgt. Damit finden 22,5 % der ankommenden Verbindungen nur eine Rufphase belegt. Bei einem 6s dauernden Rufzyklus und bei der Annahme, daß die ankommende Verbindung nach einer Zufallsverteilung auftritt, kann eine Wahrscheinlichkeit von 0,78 dafür errechnet werden, daß die ankommenden Verbindungen in der Zeitspanne zwischen den Punkten b und d (Fig. 6b) eintreffen und somit einen Sofortruf erhalten werden, nämlich einen Ruf der Phasen 02 bis 04, wenn die Phase 01 belegt ist.

Es wird nur ein kurzer Rufimpuls von etwa 300 ms innerhalb der Zeitspanne b-d bei der Rufanforderung ausgesendet. Danach wird der Verbindung eine reguläre Rufphase im nächsten Rufzyklus zugeordnet. Daher ist der Prozentsatz der Verbindungen, die sogar unter Spitzenverkehrsbedingungen einen Sofortruf erhalten, etwa 87,5 %. Diese Wahrscheinlichkeit wächst bei außerhalb der Hauptverkehrsstunde liegenden Bedingungen auf etwa 96 % der ankommenden Verbindungen an. 5 % der Verbindungen kommen jedoch an, wenn wenigstens eine Rufphase belegt ist. Diese Situation ist in Fig. 6c dargestellt, wo eine Rufanforderung zum Zeitpunkt c auftritt, in dem bereits eine Leitung gerufen wird. Wenn die Zeitspanne c-b kleiner als oder gleich 300 ms ist, wird eine zweite Leitung in derselben Rufphase gespeist und damit sofort gerufen. Wenn der Rufbeantwortungsdetektor gerade das Abheben eines Handapparats während der Zeitspanne c-b feststellt, dann wird das Rufsignal von der Leitung abgeschaltet. Nach der Rufabschaltung werden die das Abheben des Handapparats feststellenden Detektoren beider Teilnehmerleitungen überwacht, und diejenige Leitung, die den einen abgehobenen Handapparat kennzeichnenden Zustand aufweist, wird aus einer Rufliste ausgeschieden. Von da ab wird der anderen Leitung endgültig dieselbe Rufphase gegeben. Wenn kein Rufbeantwortungszustand während der Zeitspanne c-b auftritt, wird der zweiten Leitung im nächsten Rufzyklus eine freie Phase zugeordnet, und die erste zu rufende Leitung bleibt in ihrer vorherigen Rufphase.

Wenn die Zeitspanne c-b weniger als 300 ms beträgt und wenn es keinen rufbeantwortungszustand in dieser Zeitspanne gibt, dann kann die zweite Leitung vom Rufbus nach 300 ms getrennt werden. Aus Fig. 6c ergibt sich, daß die maximale Rufverzögerung etwa 300 ms beträgt, nachdem die Wahl stattgefunden hat.

Eine weitere Ausbildung hat den Zweck, in folgender Weise praktisch überhaupt keine Blockierung und immer den Sofortruf zu garantieren : Wenn in Fig. 6c die Zeitspanne b-c kleiner als oder gleich 100 ms ist, kann diese Rufphase übersprungen und die Leitung der nächsten Rufphase zugeordnet werden. Auf diese Art kann die Sofortrufverzögerung auf 100 ms begrenzt werden. Wenn die Zeitspanne b-c größer als oder gleich 100 ms ist, fängt der erste Rufimpuls in einer Rufphase an und setzt sich in der anderen Rufphase fort. Dies ist leicht dadurch ausführbar, daß das Rufrelais der Teilnehmerleitung angeschaltet bleibt, daß jedoch das Rufrelais in der Rufschaltung abgeschaltet wird. Da die nächste Rufphase bereits von einer anderen Leitung belegt worden sein könnte, bevor das Rufrelais wiederangeschaltet ist, muß auch das Leitungsrelais für die andere Leitung erregt werden. Eine auf fehlende Rufphasen zurückzuführende Blockierung kann dadurch verhindert werden, daß mehrere Leitungen derselben Rufphase zugeordnet werden ; im Fall einer Rufbeantwortung werden dann alle derselben Rufphase zugeordneten Leitungen von der Rufschaltung abgetrennt, und dann werden die das Abheben des Handapparats feststellenden Detektoren abgefragt, welche Leitung nuntatsächlich den das Abheben des Handapparats kennzeichnenden Zustand meldet. Die diesen Zustand aufweisende Leitung wird dann für diese Rufphase aus der Rufliste herausgenommen, während die anderen Leitungen wieder in die Liste zurückversetzt werden und diese Rufphase wieder durchgeschaltet wird.

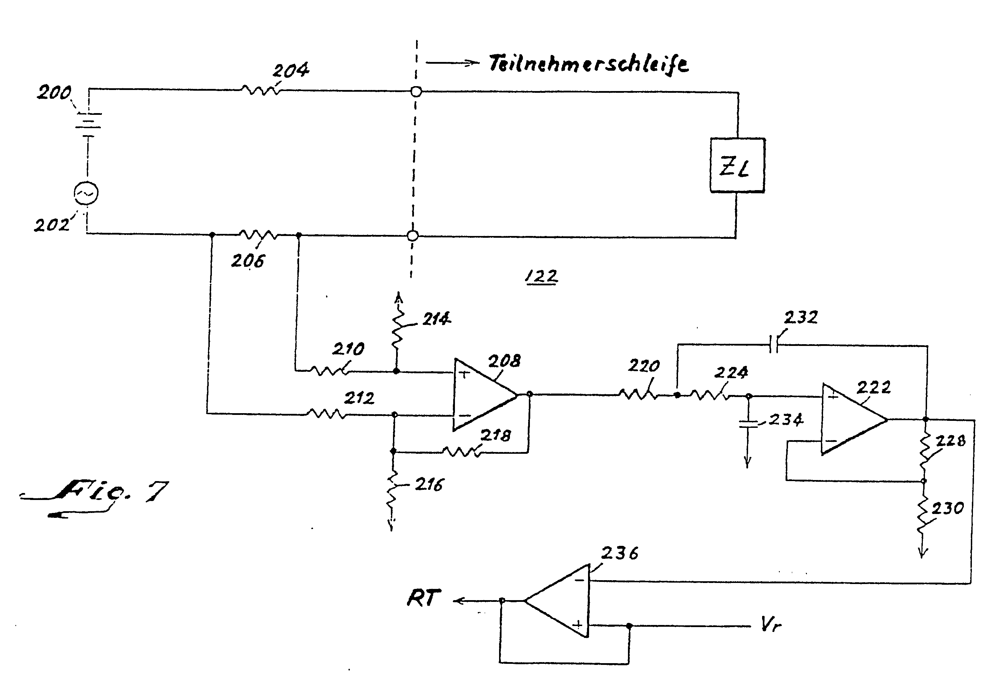

In Fig. 7 ist eine Ausführung des in Fig. 4 gezeigten Rufbeantwortungsdetektors 122 gezeigt, die bei der Erfindung vorteilhaft benutzt werden kann. Die Teilnehmerschleife ist aus einer Batterie 200, einem Rufgenerator 202, Speizewiderständen 204, 206 (oder äquivalenten Schaltungen) und einer Schleifenimpedanz ZL gebildet. Der Widerstand 206 wird für die Messung des in der Teilnehmerschleife fließenden Rufstroms benötigt. Ein Operationsverstärker 208 mit seinem Vorspannungswiderständen 210, 212, 214, 216, 218 und 220 arbeitet als Trennverstärker, der ermöglicht, daß das am Widerstand 206 auftretende Ruf- und Gleichstromsignal weiterverarbeitet werden kann. Das Rufsignal mit beispielsweise einer Spitzenspannung von 200 V ist in üblicher Weise dem Gleichstromsignal überlagert. Ein dem Operationsverstärker 208 nachgeschalteter Operationsverstärker 222 und seine Vorspannungswiderstände 224, 228, 230 und Kondensatoren 232, 234 bilden ein Tiefpaßfilter, das die Rufsignalfrequenz ausfiltert und nur das Gleichstromsignal verstärkt. Ein dem Tiefpaßfilter nachgeschalteter Verstärker 236 ist als Komparator ausgebildet, der das Gleichstromausgangssignal des Operationsverstärkers 222 mit einer Referenzspannung Vr vergleicht. Das Ausgangssignal des Verstärkers 236 ist ein Schleifenzustandssignal, das entweder den einen aufgelegten Handapparat kennzeichnenden Leitungszustand oder den einen abgehobenen Handapparat kennzeichnenden Zustand anzeigt und das zur Steuerung der Rufsignalabschaltung und zur Steuerung anderer Teile der Vermittlungsanlage hinsichtlich des erfaßten Schleifenzustands dient.

**Patentansprüche**

1. Verfahren zur Zuführung von Rufsignalen, deren Zusammensetzung und Dauer von Rufschaltungen (74-78) und von Rufüberwachungsschaltungen (122-124) bestimmt werden, für mehrere, über ein Koppelnetz miteinander verbindbare Fernmeldeleitungen (42 bis 48), deren Verbindungszustand leitungsindividuell überwacht wird und die gruppenweise über einen gemeinsamen Rufsignalbus (82) mit einer gemeinsamen Rufschaltung (74-78) verbindbar sind und gruppenweise mit jeweils einem Rufbeantwortungsdetektor (122) verbunden sind, insbesondere für digital arbeitende Fernsprechvermittlungsanlagen, bei denen die analog arbeitenden Teilnehmerleitungen über Anpassungsschaltungen (12) mit dem Koppelnetz verbunden sind, in denen eine Umwandlung zwischen den analogen Signalen auf der Teilnehmerleitung und den digitalen Signalen im Koppelnetz durchgeführt wird, dadurch gekennzeichnet,

daß in der Rufschaltung (74-78) von mehreren Rufsignalreferenzspannungsquellen (100 bis 106) erzeugte Wechselspannungen unterschiedlicher Frequenz (f1 bis f4) in Abhängigkeit von Steuersignalen, die von Rufpausendetektoren (124) geliefert werden, als verstärkte Ruf-Wechselspannung auf den gemeinsamen Rufsignalbus (82) gegeben werden,

daß die Ruf-Welchselspannungen über den Rufsignalbus (82) den Anschlußschaltungen (50 bis 56) der entsprechenden Gruppe (0) von Fernmeldeleitungen (42 bis 48) zugeführt werden,

daß die von den Rufpausendetektoren (124) gelieferten Steuersignale ferner den Anschlußschaltungen (50 bis 56) der entsprechenden Gruppe (0) von Fernmeldeleitungen (42 bis 48) zugeführt werden,

daß in den Anschlußschaltungen (50 bis 56) jede einzelne Fernmeldeleitung auf Grund der in Abhängigkeit vom Rufzustand auf dem Rufsignalbus (82) von dem Rufpausendetektor (124) gebildeten Steuersignale taktgerecht mit dem Rufsignalbus (82) verbunden wird, und daß in der jeweiligen Anschlußschaltung (50-56) die Verbindung einer zu rufenden Fernmeldeleitung mit dem Rufsignalbus so gesteuert wird, daß die Fernmeldeleitung auf diesem Wege einen Sofortruf erhält.

2. Verfahren nach Anspruch 1, dadurch gekennzeichnet, daß die Anschaltung der unterschiedlichen, verstärkten Ruf-Wechselspannungen an den Rufsignalbus (82) im Zeitvielfach.während bestimmter Phasen (01 bis 04) erfolgt, und daß die Verbindung der jeweiligen Fernmeldeleitung mit dem Rufsignalbus in der entsprechenden Phase erfolgt, um eine bestimmte, gewünschte Rufwechselspannung dieser Fernmeldeleitung zuzuführen.

3. Verfahren nach Anspruch 1 oder 2, dadurch gekennzeichnet, daß den Fernmeldeleitungen (42 bis 48) zugeordnete Rufrelais (84) in den Anschlußschaltungen (50-56) so gesteuert werden, daß sie im stromlosen Zustand des jeweiligen Rufsignals die Verbindung zwischen Rufsignalbus (82) und Fernmeldeleitung herstellen.

4. Schaltungsanordnung zur Zuführung von Rufsignalen, deren Zusammensetzung und Dauer von Rufschaltungen (74-78) und Rufüberwachungsschaltungen (122-124) bestimmt werden, für mehrere, über ein Koppelnetz miteinander verbindbare Fernmeldeleitungen (42 bis 48), mit einem gruppenweise gemeinsamen Signalbus (82), gemeinsamen Rufschaltungen (74-78) und gruppenweise gemeinsamen Rufbeantwortungsdetektoren (122), zur Durchführung des Verfahrens nach Anspruch 1 bei digital arbeitenden Fernsprechvermittlungsanlagen, bei denen die analog arbeitenden Teilnehmerleitungen über Anpassungsschaltungen (12) mit dem Koppelnetz verbunden sind, in denen eine Umwandlung zwischen den analogen Signalen auf der Teilnehmerleitung und den digitalen Signalen des Koppelnetzes durchgeführt wird, dadurch gekennzeichnet, daß jeweils eine gemeinsame Anschlußeinrichtung (10) mit einem gemeinsamen Multiplexer (34) zur zeitlichen Verschachtelung der digitalisierten Analogsteuersignale für eine Gruppe mit mehreren Fernmeldeleitungen (42 bis 48) vorgesehen ist,

daß in jeder Anschlußeinrichtung (10) mindestens eine eigene Rufschaltung (74) mit einem Rufsignalgenerator (110, 112) vorhanden ist, der den Rufsignalbus (82) speist, daß jede Anschlußeinrichtung (10) mit einem digitalen Prozessor (24) verbunden ist, der Rufsteuersignale abgibt,

daß der Rufpausendetektor (124) jeder Anschlußeinrichtung (10) mit der Ausgangsstufe (112) der Rufsignalgenerators und mit den Anschlußschaltungen (50 bis 56) der einzelnen Fernmeldeleitungen (42 bis 48) gekoppelt ist, wobei in Abhängigkeit von den Rufsteuersignalen die jeweilige, Analogsignale führende Fernmeldeleitung taktgerecht mit dem Rufsignalbus (82) verbunden wird,

und daß in jeder Anschlußeinrichtung (10) je Rüfschaltung (74-78) eine logische Steuerschaltung (118) zwischen die Rufüberwachungsschaltung (122, 123, 124) und die Verbindung zu den einzelnen Anschlußschaltungen (50 bis 56) eingefügt ist, wobei diese logische Steuerschaltung gegebenenfalls in der Anschlußschaltung eine sofortige Verbindung der entsprechenden Fernmeldeleitung mit dem Rufsignalbus für einen Sofortruf steuert.

5. Schaltungsanordnung nach Anspruch 4, dadurch gekennzeichnet, daß die Rufschaltung (74) mit mehreren Rufsignalreferenzspannungsquellen (100 bis 106) unterschiedlicher Frequenz (f1 bis f4) verbunden ist, die abhängig von den Rufsteuersignalen einzeln auswählbar oder in Kombination als Mehrfrequenzrufsignal an eine oder mehrere Fernmeldeleitungen anlegbar sind.

6. Schaltungsanordnung nach Anspruch 4, dadurch gekennzeichnet, daß jede Anschlußschaltung (50 bis 56) eine Zweidraht-Vierdraht-Gabel, eine AD-Wandler und einen DA-Wandler enthält.

7. Schaltungsanordnung nach Anspruch 4, dadurch gekennzeichnet, daß der digitale Prozessor (24) ein programmierbarer Mikrorechner ist, der einerseits mit Einrichtungen zur Erfassung der Verbindungszustände der einzelnen Fernmeldeleitungen und andererseits mit der logischen Steuerschaltung (118) verbunden ist.

8. Schaltungsanordnung nach Anspruch 4, dadurch gekennzeichnet, daß in jeder Anschlußschaltung Rufrelais (84) angeordnet sind, die abhängig von den Rufsteuersignalen Verbindungen zwischen einer oder mehreren Fernmeldeleitungen und dem Rufsignalbus (82) herstellen.

9. Schaltungsanordnung nach Anspruch 4, dadurch gekennzeichnet, daß die logische Steuerschaltung (118) eine Synchronisierschaltung enthält, die zusätzliche Steuersignale liefert, um taktgerecht Verbindungen für die Rufsignale unterschiedlicher Frequenz zwischen einer oder mehreren Fernmeldeleitungen und dem Rufsignalbus (82) herzustellen.

10. Schaltungsanordnung nach einem der Ansprüche 4 bis 9, gekennzeichnet durch ein Prüfanschalteglied (70) zur Ableitung von Leitungsprüfsignalen, einen gemeinsamen äußeren Prüfsignalbus (58) und einen gemeinsamen inneren Prüfsignalbus (60) pro Gruppe von Fernmeldeleitungen (42 bis 48), wobei die Steuerung entsprechender Prüfrelais (62 bis 68) zwischen den Fernmeldeleitungen (42 bis 48) und den Prüfsignalbussen (58, 60) ebenfalls von dem die Rufsignalzuführung steuernden digitalen Prozessor (24) durchgeführt wird.

11. Schaltungsanordnung nach einem der Ansprüche 4 bis 10, dadurch gekennzeichnet, daß ein als Ersatzanschluß vorgesehener Anschluß einer Gruppe (7) von Fernmeldeleitungen über den einen Prüfsignalbus (58) mit jeder Fernmeldeleitung der Gruppe (7) bzw. mehrerer Gruppen (0 bis 7) verbindbar ist, für deren Fernmeldeleitungen er im Störungsfall als Ersatzanschluß eingeschaltet werden soll.

**Claims**

1. Method of providing ringing signals the composition and duration of which are determined by ringing circuits (74-78) and by ringing supervision circuits (122-124) for a plurality of telecommunication lines (42 to 48) interconnectable via a switching network, the connection status of said lines being supervised line by line and said lines being connectable group by group, via a common ringing signal bus (82), to a common ringing circuit (74-78) and connected group by group each with a ringing answering detector (122), especially for digital telephone switching systems in which the analog subscriber lines are connected to the switching network via line termination circuits (12) in which conversion takes place between the analog signals on the subscriber line and the digital signals in the switching network, characterized in, that in the ringing circuit (74-78) a.c. voltages of different frequencies (f1 to f4), generated from several ringing signal reference voltage sources (100 to 106), are transmitted to the common ringing signal bus (82) as an amplified a.c. ringing voltage depending on control signals provided by ringing interval detectors (124), that the ringing a. c. voltages are supplied to the connecting circuits (50 to 56) of the corresponding group (0) of telecommunication lines (42 to 48) via the ringing signal bus (82), that the control signals supplied by the ringing interval detectors (124) are also supplied to the connecting circuits (50 to 56) of the corresponding group (0) of telecommunication lines (42 to 48), that in the connecting circuits (50 to 56) each individual telecommunication line is connected to the ringing signal bus (82) at the correct time on the basis of the control signals formed by the ringing interval detector (124) depending on the ringing status on the ringing signal bus (82), and that in the corresponding connecting circuit (50-56) the connecting of a telecommunication line to be run to the ringing signal bus is controlled in such a way that the telecommunication line receives immediate ringing by this path.

2. A method as claimed in Claim 1, characterized in that the connecting of the various amplified ringing a. c. voltages to the ringing signal bus (82) takes place by time division multiplexing during specific phases (01 to 04) and that connection of the telecommunication line in question to the ringing signal bus takes place in the corresponding phase in order to apply a certain desired a. c. ringing voltage to this telecommunication line.

3. A method as claimed in Claim 1 or 2, characterized in that ringing relays (84) allocated to the telecommunication lines (42 to 48) in the connecting circuits (50 to 56) are controlled in such a way that, in the currentless state of the ringing signal in question, they establish the connection between the ringing signal bus (82) and the telecommunication line.

4. Circuitry for supplying ringing signals the composition and duration of which are determined by ringing circuits (74-78) and by ringing supervision circuits (122-124) for a plurality of telecommunication lines (42 to 48) interconnectable via a switching network, with a common signal bus (82) for each group, common ringing circuits (74-78) and common ringing answering detectors (122) for each group, for the implementation of the method according to Claim 1 in digital telephone switching systems in which the analog subscriber lines are connected to the switching network via adaptation circuits (12) in which conversion takes place between the analog signals on the subscriber line and the digital signals in the switching network, characterized in

that in each case a common connecting device (10) with a common multiplexer (34) is provided for the purpose of time interleaving of the digitalised analog control signals for a group with a plurality of telecommunication lines (42 to 48),

that each connecting device (10) contains at least one ringing circuit (34) of its own with a ringing signal generator (110, 112) which feeds the ringing signal bus (82),

that each connecting device (10) is connected to a digital processor (24) which emits ringing control signals,

that the ringing interval detector (124) of each connecting device (10) is coupled to the output stage (112) of the ringing signal generator and to the connecting circuits (50 to 56) of the individual telecommunication lines (42 to 48), the appropriate telecommunication line carrying analog signals being connected at the correct times to the ringing signal bus (82) according to the ringing control signals,

and that there is inserted in each connecting device (10) for each ringing circuit (74-78) a logic control circuit (118) between the ringing supervision circuit (122, 123, 124) and the connection to the individual connecting circuits (50 to 56), the said logic control circuit bringing about in the connecting circuit, when necessary, immediate connection of the corresponding telecommunication line to the ringing signal bus for immediate ringing.

5. Circuitry as claimed in Claim 4, characterized in that the ringing circuit (74) is connected to several ringing signal reference voltage sources (100 to 106) of different frequencies (f1 to f4), which, depending on the ringing control signals, are individually selectable or can be applied in combination as a multifrequency ringing signal to one or more telecommunication lines.

6. Circuitry as claimed in Claim 4 characterized in that each connecting circuit (50 to 56) contains a two-wire/four-wire terminating set, an AD converter and a DA converter.

7. Circuitry as claimed in Claim 4, characterized in that the digital processor (24) is a programmable microcomputer which is connected on one side to devices for sensing the connection statuses of the individual telecommunication lines and on the other side to the logic control circuit (118).

8. Circuitry as claimed in Claim 4, characterized in that each connecting circuit contains ringing relays (84) which, depending on the ringing control signals, establish connections between one or more telecommunication lines and the ringing signal bus (82).

9. Circuitry as claimed in Claim 4, characterized in that the logic control circuit (118) contains a synchronization circuit which supplies additional control signals in order to establish, at the correct times, connections for the ringing signals of different frequencies between one or more telecommunication lines and the ringing signal bus (82).

10. Circuitry as claimed in any one of Claims 4 to 9, characterized by a test connection section (70) for deriving line test signals, a common out-test signal bus (58) and a common in-test signal bus (60) per group of telecommunication lines (42 to 48), the controlling of corresponding test relays (62 to 68) between the telecommunication lines (42 to 48) and the test signals buses (58, 60) likewise being carried out by the digital processor (24) which controls the supply of ringing signals.

11. Circuitry as claimed in any one of Claims 4 to 10, characterized in that a connection of a group (7) of telecommunication lines provided as a spare connection is connectable via the one test signal bus to each telecommunication line of the group (7) or of a plurality of groups (0 to 7) for the telecommunication lines of which it is to be inserted as a spare connection in the event of a fault.

**Revendications**

1. Procédé d'alimentation en un signal de sonnerie dont la composition et la durée sont déterminées par des circuits de sonnerie (74-78) et des circuits de supervision de sonnerie (122-124) pour une pluralité de lignes de télécommunications (42 à 48) pouvant être connectées l'une à l'autre par un réseau de connexion, dont l'état de connexion est surveillé individuellement et qui peuvent être connectées par groupes, par un bus commun (82), à un circuit de sonnerie commun (74-78) et à un circuit d'arrêt de sonnerie (122) respectif, en particulier pour un centre de commutation téléphonique numérique, dans lequel les lignes d'abonnés analogiques sont connectées au réseau de connexion par des circuits d'interface (12) dans lesquels a lieu la conversion entre les signaux analogiques de la ligne d'abonné et les signaux numériques du réseau de connexion, caractérisé en ce que,

dans le circuit de sonnerie (74-78), des tensions alternatives de différentes fréquences (f1 à f4) sont engendrées à partir de plusieurs sources de tension de référence de signal de sonnerie (100 à 106), sous la dépendance de signaux de commande délivrés par le circuit détecteur d'intervalle de sonnerie (124), sous forme de tensions alternatives amplifiées fournies sur le bus de sonnerie commun (82), en ce que

les tensions alternatives de sonnerie sur le bus de signal de sonnerie (82) sont fournies aux circuits de lignes (50 à 56) du groupe correspondant (0) de lignes de télécommunications (42 à 48), en ce que

les signaux de commande issus du circuit détecteur d'intervalle de sonnerie (124) sont fournis à différents circuits de lignes (50 à 56), en ce que,

dans les circuits de lignes (50 à 56), chaque ligne de télécommunications est connectée en cadence au bus de sonnerie (82) en correspondance avec l'état de sonnerie sur ce bus de sonnerie (82), sur la base des signaux de commande formés par le circuit détecteur d'intervalle de sonnerie (124) et en ce que,

dans chaque circuit de ligne (50-56), la connexion d'une ligne de télécommunications à appeler au bus de sonnerie est commandé de manière que la ligne de télécommunications reçoive ainsi un appel immédiat.

2. Procédé conforme à la revendication 1, caractérisé en ce que la connexion des tensions alternatives de sonnerie différentes amplifiées au bus de sonnerie (82) se produit de façon répétée dans le temps, dans des phases déterminées (01 à 04), et que la connexion de chacune des lignes de télécommunications au bus de sonnerie se produit dans une phase correspondante, pour que soit fournie à cette ligne de télécommunications une tension alternative de sonnerie déterminée souhaitée.

3. Procédé conforme à la revendication 1 ou 2, caractérisé en ce que les relais de sonnerie (84) des lignes de télécommunications (42 à 48), dans les circuits de lignes (50-56), sont commandés de manière que la connexion au bus de sonnerie (82) d'une ligne de télécommunications se produise dans l'état d'absence de courant du signal de sonnerie considéré.

4. Arrangement de circuits pour l'alimentation en un signal de sonnerie dont la composition et la durée sont déterminées par des circuits de sonnerie (74-78) et des circuits de supervision de sonnerie (122-124), pour une pluralité de lignes de télécommunications (42 à 48) pouvant être connectées l'une à l'autre par un réseau de connexion, comprenant un bus de sonnerie (82) commun à un groupe de lignes, des circuits de sonnerie communs (74-78) et des circuits d'arrêt de sonnerie (122) communs à un groupe chacun, pour l'application de la méthode de la revendication 1, dans un centre de commutation téléphonique numérique dans lequel les lignes d'abonnés analogiques sont connectées à un réseau de connexion par des circuits d'interface dans lesquels a lieu la conversion entre les signaux analogiques des lignes d'abonnés et les signaux numériques du réseau de connexion, caractérisé en ce que,

pour à chaque fois un groupe d'une pluralité de lignes de télécommunications (42 à 48), il est prévu un arrangement de terminaison (10) comprenant un multiplexeur commun (34) pour l'assemblage temporel des signaux de commande analogiques numérisés, en ce que,

dans chaque arrangement de terminaison (10), au moins un circuit de sonnerie particulier (74) est prévu, comportant un générateur de signal de sonnerie (110, 112), alimentant le bus de sonnerie (82), en ce que

chaque arrangement de terminaison (10) est pourvu d'un processeur numérique (24) fournissant les signaux de commande de sonnerie, en ce que

le détecteur d'intervalle de sonnerie (124) de chaque arrangement de terminaison (10) est couplé avec l'étage de sortie (112) du générateur de signal de sonnerie et le circuit de ligne (50 à 56) de chaque ligne de télécommunications, de sorte que, sous la dépendance des signaux de commande de sonnerie, la ligne de télécommunications correspondante transmettant alors des signaux analogiques est connectée en cadence au bus de sonnerie, et en ce que,

dans chaque arrangement de terminaison (10), chaque circuit de sonnerie (74-78) comprend un circuit logique de commande (118) entre les circuits de supervision de sonnerie (122, 123, 124) et les connexions aux circuits de lignes (50 à 56), de sorte que ce circuit logique de commande provoque dans un circuit de ligne une connexion immédiate de la ligne de télécommunications correspondante au bus de sonnerie pour un envoi d'appel immédiat.

5. Arrangement de circuits conforme à la revendication 4, caractérisé en ce que le circuit de sonnerie (74) comprend plusieurs sources de tension de référence de signal de sonnerie (100 à 106) de fréquences différentes (f1 à f4) qui, en fonction des signaux de commande de sonnerie, peuvent être sélectionnées isolément ou employées en combinaison comme signal d'appel à fréquences multiples, pour une ou plusieurs lignes de télécommunications.

6. Arrangement de circuits conforme à la revendication 4, caractérisé en ce que chaque circuit de ligne (50 à 56) comprend un réseau hybride deux fils/quatre fils, un convertisseur AN et un convertisseur NA.

7. Arrangement de circuits conforme à la revendication 4, caractérisé en ce que le processeur numérique (24) est un micro-ordinateur programmable connecté, d'une part, à un équipement détectant l'état de communication des lignes de télécommunications individuelles et, d'autre part, au circuit logique de commande (118).

8. Arrangement de circuits conforme à la revendication 4, caractérisé en ce que des relais de sonnerie (84) sont agencés dans chaque circuit de ligne, pour établir les connexions entre une ou plusieurs lignes de télécommunications et le bus de sonnerie (82) en fonction des signaux de commande de sonnerie.

9. Arrangement de circuits conforme à la revendication 4, caractérisé en ce que le circuit logique de commande (118) comprend un circuit de synchronisation fournissant un signal de commande supplémentaire, pour l'établissement de connexions cadencées du signal de sonnerie à différentes fréquences entre une ou plusieurs lignes de télécommunications et le bus de sonnerie (82).

10. Arrangement de circuits selon l'une des revendications 4 à 9, caractérisé en ce qu'il comprend un accès de test (70) servant à dériver des signaux de test de lignes, un bus de test extérieur commun (58) et un bus de test inférieur commun (60), par groupe de lignes de télécommunications, arrangés de sorte que la commande des relais de test appropriés (62 à 68), disposés entre les lignes de télécommunications (42 à 48) et les bus de test (58, 60), est acheminée tout comme celle du processeur numérique (24) pour l'envoi du signal de sonnerie.

11. Arrangement de circuits selon l'une des revendications 4 à 10, caractérisé en ce qu'un accès de ligne servant d'accès de secours d'un groupe (7) de lignes de télécommunications peut être connecté à un bus de test (58) en même temps que l'une quelconque des lignes du groupe (7) ou, respectivement, de plusieurs groupes (0 à 7), afin que cet accès de ligne puisse être connecté en tant qu'accès de secours pour cette ligne.

_Fig. 1_

32 Kanäle
(jeweils)

60 Teilnehmer

Anschlußeinrichtung   10

Anpassungsschaltung   12

16   18

20   zum Koppelnetz

22

28   30

24   26

0 037 540

Fig. 2

zum Koppel-netz

Sprache

Daten bus (schnell)

Daten bus (langsam)

60 Teil-nehmer

0 037 540

0 037 540

Fig. 3

Fig. 4

Fig. 5

0 037 540

*Fig. 6* a

Ø1

1,3
SEC.

4,7
SEC

Ø 2

1,3
SEC.

Ø 3

1,3
SEC.

Ø 4

1,3
SEC.

0,8
SEC.

6
SEC.

4 Ø U.S.-Ruf

*Fig. 6* b

Ø1

1,3
SEC.

4,7
SEC.

a          b                    d

*Fig. 6* c

Ø1

1,3
SEC.

4,7
SEC.

a      c      b                    d

Teilnehmerschleife

_Fig. 7_

0 037 540